**Europäisches Patentamt**

**European Patent Office**

**Office européen des brevets**

(11) Publication number: **0 157 959**
**A1**

## (12) EUROPEAN PATENT APPLICATION

(21) Application number: **84302024.9**

(22) Date of filing: **26.03.84**

(51) Int. Cl.⁴: **B 60 Q 1/44**

(43) Date of publication of application
**16.10.85 Bulletin 85/42**

(84) Designated Contracting States:
**AT BE CH DE FR GB IT LI LU NL SE**

(71) Applicant: **Lee, Yuan-Chiang**
**4th Floor, no. 25, Lane 267, Ta-Tung N. Road
San-Chung Taipei Hsien(TW)**

(71) Applicant: **Kuo, Wen-Po**
**No. 31, Kung-Shang Road
Wu-Ku Taipei Hsien(TW)**

(72) Inventor: **Lee, Yuan-Chiang
4th Floor, no. 25, Lane 267, Ta-Tung N. Road
San-Chung Taipei Hsien(TW)**

(72) Inventor: **Kuo, Wen-Po
No. 31, Kung-Shang Road
Wu-Ku Taipei Hsien(TW)**

(74) Representative: **Jackson, Peter Arthur et al,
GILL JENNINGS & EVERY 53-64 Chancery Lane
London WC2A 1HN(GB)**

(54) Deceleration warning device for a vehicle.

(57) A conductor wheel (21) is moved, upon release of the accelerator pedal, into contact with a conductor wheel (41) to close a motor circuit (52) and energise a motor (31). The motor drives the conductor wheel (42) and operates a discontinuous switch (44) which thus discontinuously energises an indicator circuit (50) causing a lamp (51) to flash for a limited period.

FIG. 3

Croydon Printing Company Ltd

EP 0 157 959 A1

0157959

LEE, YUAN-CHIANG and KUO, WEN-PO        Ref: 50/2331/02
DECELERATION WARNING DEVICE FOR A VEHICLE

The invention relates to a device for giving a visible warning, particularly to the driver of a following vehicle, when a vehicle to which the device is fitted is about to decelerate.

Traditionally such devices consist of brake warning lights which are energised when the brake pedal is depressed. What happens in practice is that, after the driver of the vehicle has made a conscious decision to brake his vehicle, he removes his foot from the accelerator pedal, transfers it to the brake pedal, and depresses the brake pedal. Our analysis has shown that this takes between one and one and a half seconds. This delays by a corresponding time the warning which a following driver will receive that the vehicle ahead is about to decelerate. If the delay could be reduced, there would be a reduced risk of accident, particularly when vehicles are driving fast on a motorway or when following closely behind one another at a slower speed in city traffic.

In accordance with one aspect of the invention, a vehicle deceleration warning device comprising a lamp which is energised to give a warning when a control pedal of a vehicle to which the device is fitted, is operated to cause potential deceleration of the vehicle is characterised by means which is arranged to respond to release of an accelerator pedal and thereupon and for a limited time periodically causes energisation of a warning lamp so that the lamp flashes for the limited period.

Such a device responds immediately after the vehicle driver lifts his foot from the accelerator pedal and thus gives a following driver an earlier warning than in the case of conventional brake

- 2 -

lights. The flashing of the warning lamp only occurs for a limited period, at the initiation of the deceleration thus saving energy and avoiding the unnecessary continuing flashing of the lamp when the accelerator pedal is not depressed, for example when the vehicle is coasting, or even stationary.

The periodic operation may be provided electrically. For example, there may be a microswitch which is operated by the accelerator pedal and which switches a solid state pulsing circuit that energises the lamp with pulsed energy.

Alternatively, the periodic operation may be provided mechanically, and, in accordance with a second aspect of the invention, a vehicle deceleration warning device of the kind comprising a lamp which is energised to give a warning when a control pedal of a vehicle, to which the device is fitted, in operated to cause potential deceleration of the vehicle, is characterised by means which is arranged to respond to release of an accelerator pedal and thereupon enables closure of an electrical motor circuit containing a motor so that the motor is energised; a part which is rotated by the motor when the motor is energised; means which, after the part has rotated through a certain angle, opens the motor circuit so that the motor is de-energised; an electrical indicator circuit containing a lamp; and means responsive to the motor when energised for periodically closing the indicator circuit and causing the lamp to flash.

Since the motor is de-energised after the rotatable part has been rotated through a certain angle, for example up to one revolution, the flashing of the warning lamp only occurs for a limited period.

The rotary part may be, for example, a cam, which operates a switch in the motor circuit. In a particularly convenient construction, however, the rotatable part is formed by a movable conductor wheel which is movable bodily into contact with a second conductor wheel to close the motor circuit and is thereupon rotated by the second wheel, which is itself rotated by the motor. The reopening of the motor circuit, after the first wheel has been rotated through a certain angle, may then be provided by an insulating portion at the periphery of the first wheel so that the motor circuit is opened when the first wheel has been rotated until the insulating portion engages the second wheel.

To ensure that a conducting portion at the periphery of the first wheel will engage the second wheel during the next cycle, a ratchet wheel may be fixed coaxially with the first wheel for engagement with a pawl whereby the pawl turns the ratchet wheel and first wheel through a small angle during movement of the first wheel away from and back to the second wheel between successive cycles.

The first wheel may be mounted on a carriage which is arranged to be coupled mechanically to the accelerator pedal. For example, there may be a tension element which, when the accelerator pedal is depressed, pulls the carriage, to move the first wheel away from the second wheel, against the action of a spring, the spring urging the carriage to move to carry the first wheel back into contact with the second wheel when the pedal is released.

The means for periodically closing the indicator circuit may comprise a conductor member which is rotated by the motor when energised and has around its axis of rotation alternating conducting and insulating portions; and a contact which bears against the member and alternately engages these portions. In a particularly compact construction, the conductor member is the second conductor wheel and the insulating portions are provided at a face of the wheel.

An example of a device constructed in accordance with the present invention is illustrated diagrammaically in the accompanying drawings, in which:-

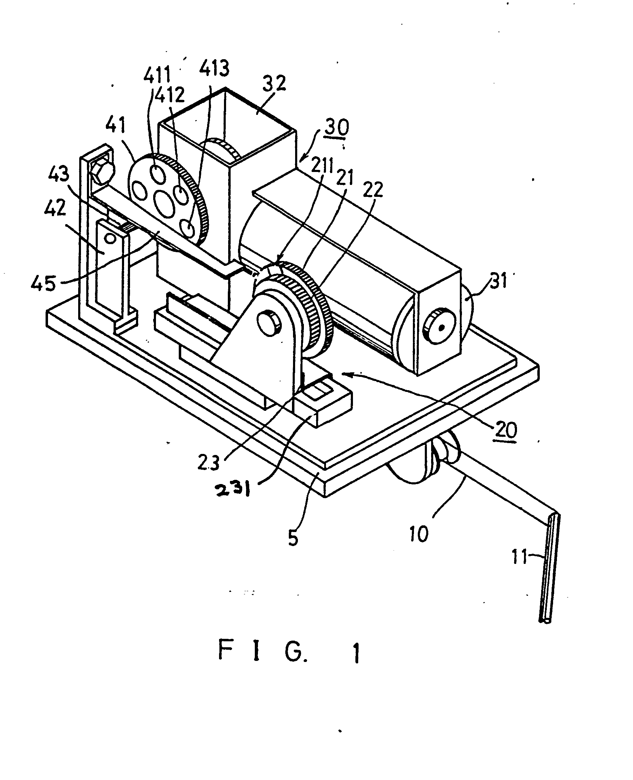

Figure 1 is a perspective view;

Figure 2 is a side elevation, partially in section; and,

Figure 3 is a plan.

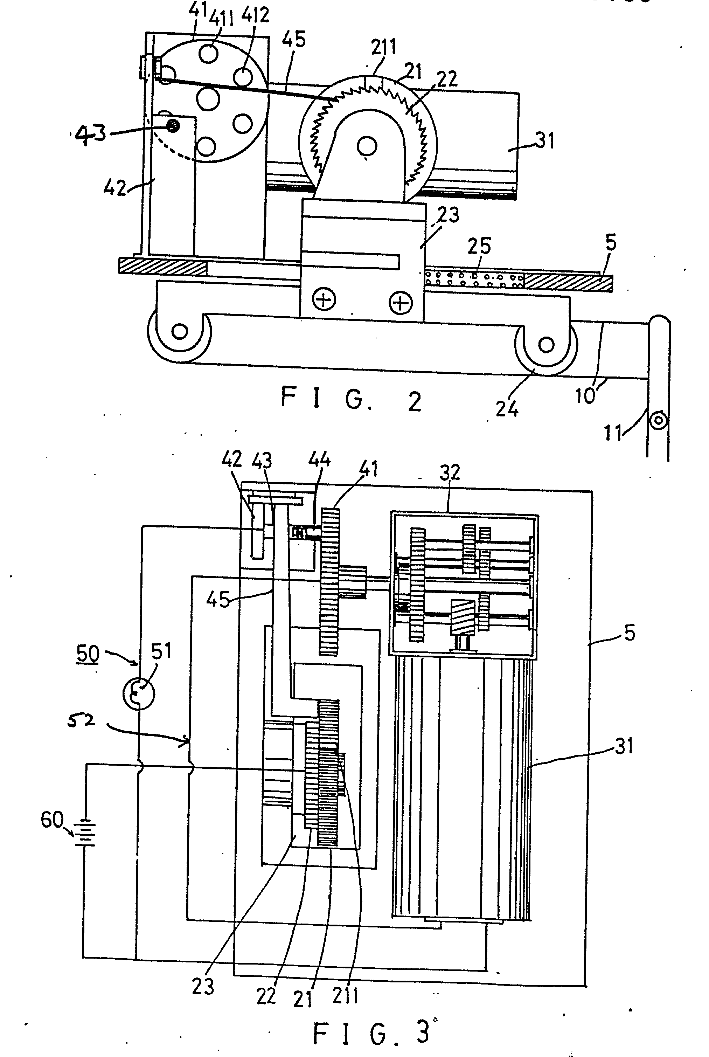

As shown in the drawings, the device is installed on a base board 5. A carriage 23, carrying a coaxial assembly of conductor wheel 21 and ratchet wheel 22, is movable to and fro along an upstanding longitudinally slotted guide 231 and is urged to the left, as shown in Figure 2, by a spring 25. A tension element 10, in this case a wire, couples a base part 24, carried by the carriage beneath the base plate 5, to a control rod 11 of an accelerator pedal of a vehicle to which the device is fitted. When the accelerator pedal is depressed, the wire 10 pulls the carriage to the right against the action of the spring 25, and when the accelerator pedal is released, the carriage moves to the left under the action of the spring 25. Towards the end of this movement of the carriage towards the left, the teeth of the ratchet wheel 22 are engaged by a spring strip 45 forming a pawl, so that the ratchet wheel 22 and with it the conductor wheel 21, are rotated through a small angle until the movement of the carriage to the left is completed when the periphery of the wheel 21 comes into contact with the periphery of a second conductor wheel 41. The wheel 41 is mounted on the output shaft of a reduction gearbox 32, the input gear of which is mounted on the driven shaft of an electric motor 31. As illustrated diagrammatically in Figure 3, the motor 31 is connected in an electrical circuit 52, containing the conductor wheels 21 and 41, and also a power source 60. The engagement and disengagement of the wheels 21 and 41 effectively forms a switch which closes and opens the circuit 52, to energise and de-energise the motor 31, respectively.

Inset in one face of the conductor wheel 41 are a number of equiangularly spaced insulating disc portions 411,412,413. At a corresponding radius this face of the wheel 41 is engaged by a spring loaded contact 44 carried by a fixed tubular conductor 43, which is mounted on an insulating support 42. As the wheel 41 is rotated, via the gearbox 32, when the motor 31 is energised, a circuit 50, containing a lamp 51, is alternately opened and closed as the contact 44 runs alternately over conducting portions of the wheel 41 and the insulating discs 411 etc.

It will be appreciated that the motor 31 and the lamp 51 are in parallel with one another, that the switch formed by the wheels 21 and 41 is in the motor circuit 52; that the switch formed by the contact 44 and the wheel 41 is in the indicator circuit 50; but that the indicator circuit 50 also includes the switch formed by the wheels 21 and 41, in series with the switch formed by the contact 44 and the wheel 41.

With this construction, when the car is being driven normally, i.e. the accelerator pedal is depressed, the wire 10 draws the carriage 23 to the right in Figure 2, so that both circuits are de-energised, owing to the disengagement of the conductor wheels 21 and 41. Whenever the driver starts to decelerate, by releasing the accelerator pedal, the wire 10 is slackened by movement of the control rod 11 so that the carriage 23 is free to move to the left in Figure 2 under the action of the spring 25 until the conductor wheel 21 comes into engagement with the wheel 41 and closes the motor circuit 52. The motor then starts running and rotates the wheel 41 which in turn, via the contact 44, intermittently closes the indicator circuit 50 and intermittently energises the lamp 51 which flashes to give the warning of the intending deceleration. At the same time the wheel 41 rotates the wheel 21, owing to meshing teeth or other frictional engagement at their peripheries. This rotation of the wheel 21 continues until an insulating insert 211 in a recess in the periphery of the wheel 21 comes into engagement with the wheel 41, thereby opening the circuits and de-energising both the motor and the lamp. When the driver accelerates again, the control rod pulls on the wire 10 which draws the carriage 23 to the right, as seen in Figure 2, again, bringing the wheels 21 and 41 out of engagement with one another. When the accelerator pedal is next released, upon the next impending deceleration, the carriage 23 moves back to the left, as shown in Figure 2, and as it does so the pawl 45 rotates the ratchet wheel 22 and hence the conductor wheel 21 so that the insulating insert 211 is no longer in alignment with the adjacent peripheral portion of the wheel 41. When the wheel 21 then moves into engagement with the wheel 41, the motor circuit is reclosed, and hence the wheel 41 rotated and the lamp 51 energised intermittently.

The device is therefore simple in structure and economic in application, and provides the excellent effect of a prompt flashing signal in response to impending deceleration of a vehicle to which the device is fitted, thereby warning the drivers of other cars to take effective safety measures.

CLAIMS

1. A vehicle deceleration warning device comprising a lamp (51) which is energised to give a warning when a control pedal (11) of a vehicle to which the device is fitted, is operated to cause potential deceleration of the vehicle, characterised by means (10) which is arranged to respond to release of an accelerator pedal (11) and thereupon and for a limited time periodically causes energisation of a warning lamp (51), so that the lamp flashes for the limited period.

2. A vehicle deceleration warning device comprising a lamp (51) which is energised to give a warning when a control pedal (11) of a vehicle, to which the device is fitted, is operated to cause potential deceleration of the vehicle, characterised by means (10) which is arranged to respond to release of an accelerator pedal (11) and thereupon enables closure of an electrical motor circuit (52) containing a motor (31) so that the motor is energised; a part (21) which is rotated by the motor when the motor is energised; means (41,211) which, after the part has rotated through a certain angle, opens the motor circuit so that the motor is de-energised; an electrical indicator circuit (50) containing a lamp (51); and means (41,44) responsive to the motor when energised for periodically closing the indicator circuit and causing the lamp to flash.

3 A device according to claim 2, characterised by a movable conductor wheel forming the part (21) which is movable bodily into contact with a second conductor wheel (41) to close the motor circuit (52) and is thereupon rotated by the second wheel (41) which is rotated by the motor (31).

4. A device according to claim 3, characterised by an insulating portion (211) at the periphery of the first wheel (21) such that when the first wheel has been rotated until the insulating portion engages the second wheel, the motor circuit is opened.

5. A device according to claim 4, characterised by a ratchet wheel (22) fixed coaxially with the first wheel (21), and a pawl (45) for engaging the ratchet wheel and hence turning the ratchet wheel and first wheel through a small angle during movement of the first wheel away from and back to the second wheel between successive cycles, so that the insulating portion is clear of the second wheel when the first and second wheels next come into contact with one another.

6. A device according to any one of claims 3 to 5, characterised by the first wheel (21) being mounted on a carriage (23) which is arranged to be coupled mechanically by the means (10) to the accelerator pedal.

7. A device according to claim 6, characterised in that the means (10) is a tension element which, when the accelerator pedal is depressed, pulls the carriage (23), to move the first wheel (21) away from the second wheel (41) against the action of a spring (25), the spring urging the carriage to move to carry the first wheel back into contact with the second wheel when the pedal is released.

8. A device according to any one of claims 2 to 7, characterised in that the means for periodically closing the indicator circuit (50) comprises a conductor member (41), which is rotated by the motor (31) when energised and has, around its axis of rotation, alternating conducting and insulating (411,412,413) portions; and a contact (44) which bears agains the member and alternately engages these portions.

9. A device according to claim 8, when dependent upon any of claims 3 to 7, characterised in that the conductor member is provided by the second conductor wheel (41) and the insulating portions (411,412,413) are provided at a face of the wheel (41).

F I G. 1

F I G. 2

F I G. 3

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-2 876 431 (FOSTER)<br>* column 1, lines 39-57; figures * | 1,2 | B 60 Q 1/44 |
| Y | US-A-3 911 394 (SHAMES)<br>* abstract; figure 1 * | 1,2 | |
| Y | US-A-3 305 829 (KNEZ)<br>* figures 1,2; column 2, line 1 - column 3, line 50 * | 1,2 | |
| A | FR-A-1 299 402 (TOURNIER)<br>* page 2, right-hand column, lines 33-36 * | 1 | |
| | ----- | | |

**TECHNICAL FIELDS SEARCHED (Int. Cl.4)**

B 60 Q 1/44

The present search report has been drawn up for all claims

| Place of search<br>THE HAGUE | Date of completion of the search<br>14-11-1984 | Examiner<br>ONILLON C.G.A. |
|---|---|---|

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503. 03 82